# EUROPEAN PATENT SPECIFICATION

(11) **EP 2 905 457 B1**
(45) Date of publication and mention of the grant of the patent: **29.08.2018**
(21) Application number: 14151237.6
(22) Date of filing: 15.01.2014
(51) Int. Cl.: F02M 51/06, F02M 61/18

(54) **Valve assembly and fluid injector for a combustion engine**
Ventilanordnung und Flüssigkeitseinspritzdüse für eine Brennkraftmaschine
Ensemble de soupape et injecteur de fluide pour moteur à combustion

(43) Date of publication of application: 12.08.2015
(73) Proprietor: Continental Automotive GmbH, 30165 Hannover (DE)
(72) Inventor: Agresta, Antonio, 56122 Pisa (IT); Canesi, Nicola, 56121 Pisa (IT); Gestri, Luca, 56023 Cascina (PI) (IT); Saliu, Marco, 07100 Sassari (IT); Matteucci, Luca, 56121 Pisa (IT)

(56) References cited:
- EP-A1- 1 988 281
- EP-A1- 2 369 166
- WO-A1-2004/040124
- DE-A1- 10 163 909
- DE-A1- 10 313 225
- DE-A1-102008 039 920
- DE-A1-102010 032 050

## Description

The invention relates to a valve assembly for a fluid injector for an internal combustion engine, wherein the valve assembly comprises a valve body with a valve recess and central longitudinal axis.

Injectors are in widespread use, in particular for internal combustion engines, where they may be arranged in order to dose a fluid into an intake manifold of the internal combustion engine or directly into a combustion chamber of a cylinder of the internal combustion engine.

Due to increasingly strict legal regulations concerning the admissibility of pollutant emissions by internal combustion engines, which are arranged in vehicles for example, it is necessary to take action in various ways in order to reduce these pollutant emissions.

One possible starting point is to reduce the pollutant emissions which are directly produced by the combustion engine. For example after an injection process, when a valve needle has returned to its closing position, a remaining fuel volume inside an injector in the region of a nozzle tip can cause deposition of not combusted particles . This leads to high carbon- (also HC-) and particle number (also PN-) emissions, and thus is a challenge in order to fulfill legal regulations such as the European Emission Normative EU6C.

EP 2369166 A1 discloses an injection nozzle for an internal combustion engine, the injection nozzle comprising a nozzle body provided with a bore within which a valve needle is moveable, the valve needle being engageable with a substantially conical valve seating to control fuel delivery through a set of nozzle outlets, said nozzle outlets including respective entry openings defined in a wall of a sac volume of the nozzle body, wherein the valve needle includes a first valve region, a second valve region and a seat region defined by a transition between the first and second valve regions which seats against the valve seating when the nozzle is in a non-injecting state. The valve needle comprises a third valve region, adjacent the second valve region, the third valve region having an outer surface defining a curved profile, the end of the outer surface terminating substantially in alignment with the entry openings.

The fuel injection valve according to DE 10163909 A1 has a valve needle installed in an orifice which has a valve seat on the combustion chamber side to interact with the valve needle. A throttling pin is formed on the combustion chamber side point of the valve needle and with contact of the valve needle on the valve seat protrudes by at least a part of its length into a blind hole connected to the valve seat on the downstream side. The smallest flow passage is formed between the throttling pin and wall of the blind hole when the needle is lifted from the valve seat.

DE 10313225 A1 relates to a fuel injection valve comprising a valve body containing a borehole which is defined, on the combustion chamber end thereof, by a conical valve seat from which a plurality of injection channels extend, said injection channels having inlets which are located in the valve seat at the same height in relation to the longitudinal axis of the borehole. A valve needle is arranged in the borehole in such a way that it can be longitudinally displaced, and a pressure chamber is embodied between the wall of the borehole and the valve needle. Said pressure chamber can be filled with fuel. A first conical surface and a second conical surface arranged downstream from the first are located on the combustion chamber end of the valve needle, a tight edge being formed between said conical surfaces. A peripheral first annular groove is embodied in the second conical surface of the valve needle, said annular groove extending in a radial plane in relation to the longitudinal axis of the valve needle and comprising an upstream edge and a downstream edge, the downstream edge extending, in the closing position of the valve needle, at the same level as the inlets of the injection channels.

Disclosed in WO 2004/040124 A1 is a fuel injection valve comprising a valve member, within which a bore is configured. Said bore is delimited by a valve seat at the end facing the combustion chamber while at least one injection port is embodied in the final area thereof, which is located at the end facing the combustion chamber. A piston-shaped valve needle is disposed inside the bore so as to be movable in a longitudinal direction and is provided with a substantially conical valve sealing area, by means of which the valve needle cooperates with the valve seat in order to control the at least one injection port. The valve seat encompasses a first conical partial area and a second conical partial area which is located downstream of the first conical partial area and is configured in an elevated manner relative thereto.

DE 102010032050 A1 relates to a nozzle body having a nozzle needle cut-out that is arranged about a longitudinal axis, comprising a conical nozzle needle seat which leads into a blind hole, and at least one injection hole, which extends from the blind hole to an outer surface of the nozzle body. At the transition to the conical nozzle needle seat, the blind hole has a blind hole diameter and extends from the transition in the axial direction all the way to a blind hole depth, wherein the ratio of the blind hole diameter to the blind hole depth is greater than or equal to 1.5. The invention further relates to an assembly consisting of a nozzle body and a nozzle needle and to a fuel injector.

DE 102008039920 A1 relates to a nozzle body for a nozzle assembly of a fuel injector, particularly of a common-rail-fuel injector, with a needle bore for a needle piston of a nozzle needle, wherein the needle bore ends in a blind hole above a nozzle needle seat for a sealing surface of a nozzle needle tip of the nozzle needle, into said blind hole a tappet of the nozzle needle tip can be inserted, wherein a recess is provided in a transitional region from the nozzle needle seat to the blind hole. The invention further relates to a method for introducing a nozzle bore into a nozzle body of a fuel injector, particularly of a common-rail-fuel injector.

One object of the invention is to specify an injector for a combustion engine which facilitates a reliable and precise function and makes a contribution to particularly small pollutant emissions.

The object is achieved by the features of the independent claim. Advantageous embodiments of the invention are given in the sub-claims.

A valve assembly for a fluid injector for an internal combustion engine is specified. Further, a fluid injector for a combustion engine is specified, the fluid injector comprising the valve assembly and in particular an actuator. The fluid injector is in particular a fuel injector. It may preferably be provided for injecting fuel directly into a combustion chamber of the internal combustion engine.

The injector comprises a valve body with a valve recess, a central longitudinal axis and a first axial end and a second axial end with respect to the central longitudinal axis. Furthermore, the injector comprises a valve needle being axially movable within the valve recess with respect to the central longitudinal axis. The valve needle prevents, in concurrence with a seal seat area of the valve body, a fluid flow through at least one flow hole in its closing position and otherwise enables it. In particular, the valve needle is in mechanical contact with the seal seat area when the valve needle is in the closing position.

The valve body also comprises a sac volume step adjacent to the seal seat area and in particular downstream of the seal seat area. The sac volume step forms a part of an inner surface of a wall of the valve body. In other words, the sac volume step is defined by a section of an inner circumferential surface of the valve body.
Furthermore, the injector comprises a sac volume being designed as one end of the valve recess and being limited by a further part of the inner surface of the wall of the valve body. The further part of the inner surface extends away from the sac volume step towards the first axial end of the valve body. The injector comprises at least one flow hole which penetrates the wall of the valve body in the region of the sac volume from the valve recess to an outside region of the valve body.

This design of an injector for a combustion engine comprising a sac volume step in combination with the location of the respective flow hole enables advantageous flow field dynamics in the region of the sac volume. Hence it is advantageous for emptying the sac volume from remaining fuel after the valve needle has returned to its closing position and thus makes a contribution to reduce polluting emissions like high carbon emissions - also called HC-emissions - and particulate number emissions - also called PN-emissions. The sac volume step leads to turbulences of the flowing fluid so that the flow is not laminar anymore. For this reason some kinetic energy of the flowing fluid can be transferred to the remaining fuel in the sac volume and the effect of this is a contribution to an emptying of the sac volume. Yet another advantage of the reduction of remaining fuel in the region of the sac volume after the valve needle has returned to its closing position is obviating a nozzle tip wetting and hence reducing PN-emission.

According to one embodiment, the injector comprises a sac volume step which substantially extends parallel to the central longitudinal axis. For example, the distance of the inner circumferential surface of the valve body from the central longitudinal axis, in the course from the second axial end towards the first axial end, decreases in the region of the seal seat area, remains constant in the region of the sac volume step and then decreases further in the region of the further part of the inner surface. This orientation of the sac volume step allows for unique flow field dynamics and flow conditions for emptying the sac volume after the valve needle has returned to its closing position and makes a contribution to keep remaining fuel little inside the sac volume. A step height of the sac volume step is represented by an axial length of the sac volume step. The sac volume step may, for example, have a step height in the range between 0.01 mm and 0.15 mm, the limits being included.

According to a further embodiment, the inlet of the flow hole is arranged proximate to the sac volume step and, in particular, closer to the sac volume step than to the central longitudinal axis. In this context a distance between the inlet of the flow hole and the sac volume step may for example be less than 0.1 mm.

Such an arrangement of the flow hole is advantageous for the flow field dynamics and can further improve emptying the sac volume from the remaining fuel after the valve needle has returned to its closing position.

The further part of the inner surface of the wall of the valve body which limits the sac volume comprises a conically shaped area adjacent to the sac volume step. In this context, the conically shaped area has a decreasing distance to the central longitudinal axis in the direction towards the first axial end of the valve body. A cone angle of the conically shaped area between 130° and 150°, the limits being included, is preferable for flow conditions of the flowing fluid.

Furthermore a first diameter of a free volume of the valve recess in the region of the sac volume step is represented by a geometrical distance of opposite sides of the sac volume step in reference to a cross section with respect to the central longitudinal axis. For example in the case of the sac volume step extending parallel to the central longitudinal axis, the first diameter may be in a range between 1.0 mm and 1.4 mm, the limits being included.

The further part of the inner surface of the wall of the valve body limiting the sac volume comprises a conically shaped ground area adjacent to the conically shaped area. In this context, the conical shape of the conically shaped ground area has a different angle to the central longitudinal axis than the conically shaped area and has a decreasing distance to the central longitudinal axis in the direction towards the first axial end of the valve body. Preferably the cone angle of the conically shaped area is in between 130° and 150°, whereas the cone angle of the conically shaped ground area is in between 90° and 120°. Furthermore an advantageous height of the conically shaped ground area is in the range from 0.2 mm to 0.4 mm. In this context the height of the conically shaped ground area represents a geometrical length parallel to the central longitudinal axis from a point where the conical shape of the conically shaped area differs from the one of the conically shaped ground area to a point where the valve recess ends in the direction towards the first axial end of the valve body. Moreover, the further part of the inner surface of the wall of the valve body comprises a spherically shaped part of the inner surface adjacent to the conically shaped ground area limiting the sac volume. The spherically shaped part is, in other words, positioned subsequent to the conically shaped ground area in axial direction from the second towards the first axial end.

According to a further embodiment, the inlet of the flow hole of the injector is arranged in the conically shaped area of the sac volume. This positioning of the flow hole is advantageous for the remaining fuel to flow through the flow holes out of the valve body and hence for reliable emptying of the sac volume after an injection process when the valve needle has returned to its closing position.

It is particularly advantageous for flow conditions to prevent remaining fuel inside the sac volume after an injection process when, for example, the flow hole is arranged in the conically shaped area in combination with the sac volume step substantially extending parallel to the central longitudinal axis along with one special shape of the ground area comprising the further part of the inner surface of the wall of the valve body limiting the sac volume.

Exemplary embodiments of the invention are explained in the following with the aid of schematic drawings and reference numbers. Identical reference numbers designate elements or components with identical functions. In the figures:
- Figure 1: shows an injector in a longitudinal section view,
- Figure 2: shows an enlarged side view of a nozzle tip body of the injector,
- Figure 3: shows an example of the sac volume of the injector which does not belong to the invention,
- Figure 4: shows an example of the sac volume of the injector which does not belong to the invention,
- Figure 5: shows an exemplary embodiment of the sac volume of the injector.

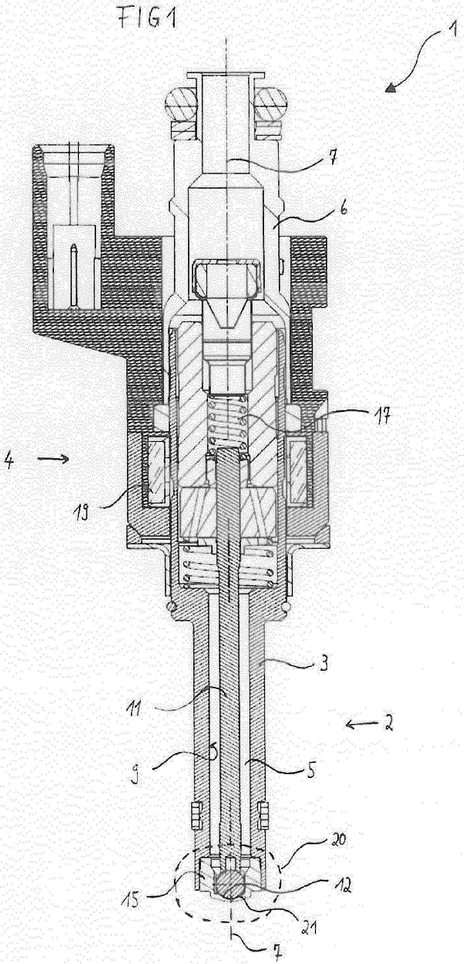

Figure 1 shows an injector 1 with a nozzle assembly 2 and an actuator 4. The actuator 4 functionally interacts with the nozzle assembly 2.

The nozzle assembly 2 comprises a valve body. The valve body comprises a valve body part 3 and a nozzle tip body 15. The nozzle tip body 15 is fixedly coupled to the valve body part 3. Alternatively, the valve body part 3 and the nozzle tip body 15 can be a single piece. The actuator 4 comprises an injector body 6. The valve body part 3 is fixedly coupled to the injector body 6, for example by a nozzle clamping nut. The valve body part 3 and the injector body 6 form a common housing of the injector 1.

The valve body has a central longitudinal axis 7. It comprises a wall 9 which defines a valve recess 5. Furthermore the valve body comprises a first axial end and a second axial end, wherein the nozzle tip body 15 is positioned at the first axial end of the valve body. Within the valve recess 5, a valve needle 11 is arranged axially movable with respect to the central longitudinal axis relative to the valve body. The valve needle 11 has a round end portion 12 and is biased by a spring element 17. The round end portion 12 may be a ball which is fixed to a shaft of the valve needle 11 at the axial end of the valve needle 11 which faces towards the first axial end of the valve body.

The actuator 4 has a coil 19 for generating a magnetic field. The actuator 4 is operable to actuate the valve needle 11 by means of the magnetic field such that the valve needle 11 can perform a movement along a direction of the central longitudinal axis 7 against the bias of the spring element 17.

The nozzle tip body 15 limits a free volume of the valve recess 5. The nozzle tip body 15 comprises at least one flow hole 13. In other words, the nozzle tip body 15 closes the valve recess 5 at the first axial end, except for the at least one flow hole 13.

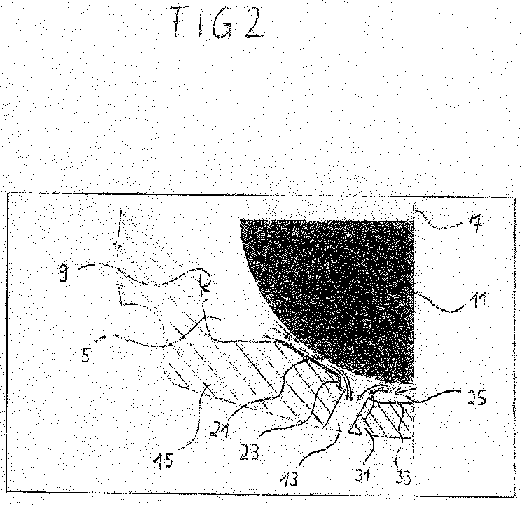

The nozzle tip body 15 further comprises a seal seat area 21, in which the valve needle 11 sealingly rests with its round end portion 12 in its closing position due to forces acting on it, amongst others one force being a spring force by the spring element 17. Details of the nozzle tip body 15 will be explained below with reference to figures 2 to 5.

Depending on a force balance of the forces acting on the valve needle 11, in particular comprising the spring force of the spring element 17 and the force transferred to the valve needle 11 by the actuator 4, the valve needle 11 is movable out of its closing position and into its closing position to enable or prevent a flow of a fluid through the flow hole 13. One actuating force is exerted by the spring element 17 in direction of the closing position. Another actuating force is exerted by the coil 19 in order to move the valve needle 11 out of its closing position towards an opening position. A hydraulic force is a further force acting on the valve needle 11 which may be exerted by the fluid in direction to the closing position of the valve needle 11, in particular due to pressure differences. The fluid may be for example gasoline or diesel.

In figures 2 to 5 described below, enlarged views of a region 20 of figure 1 are shown, which show exemplary constructional designs of the nozzle tip body 15.

In figure 2 an enlarged view of the region 20 of figure 1 is shown which exhibits an exemplary constructional design of the nozzle tip body 15 of the injector 1. The enlarged view is a longitudinal section view of the nozzle tip body 15.

The valve needle 11 prevents, in concurrence with the seal seat area 21 a fluid flow through the flow hole 13 in its closing position and otherwise enables it. In other words, the round end portion 12 of the valve needle 11 abuts the seal seat area 21 when the valve needle 11 is in the closing position to prevent fluid flow through the flow hole 13. The actuator 4 is operable to displace the valve needle 11 axially towards the second axial end of the valve body for establishing a gap between the seal seat area 21 and the round end portion 12 for enabling fluid flow from the second axial end through the gap to the flow hole 13 and further through the flow hole 13 out of the valve body.

During an injection process fluid flows in the direction from the second axial end towards the first axial end of the valve body in a free volume of the valve recess 5. Thereupon the fluid passes the seal seat area 21 and afterwards a sac volume step 23, which forms a part of an inner surface of the wall 9 of the valve body. One fraction of the fluid can directly pass the inlet of the flow hole 13 and exit the valve body to an outside area of the injector 1. Another, in particular small, fraction of the fluid enters a sac volume 25, which is designed as one end of the valve recess 5 and which is limited by a further part of the inner surface of the wall 9 of the valve body. Due to the sac volume step 23, flow conditions change and the flow of the fluid is not laminar anymore. Turbulences develop and influence the fluid flow dynamics which is advantageous for a further flow of the fluid.

Fuel remaining inside the sac volume 25 after the valve needle 11 has returned into contact with the seal seat area 21 may cause pollutant emissions. Because of the introduced turbulent flow generated by the sac volume step 23, some kinetic energy of the flowing fluid can be transferred to the remaining fuel inside the sac volume 25. This kinetic energy of the remaining fuel promotes dispensing a particularly large portion of the remaining fluid - or preferably of the complete remaining fluid - through the flow hole 13 out of the valve body of the injector 1.

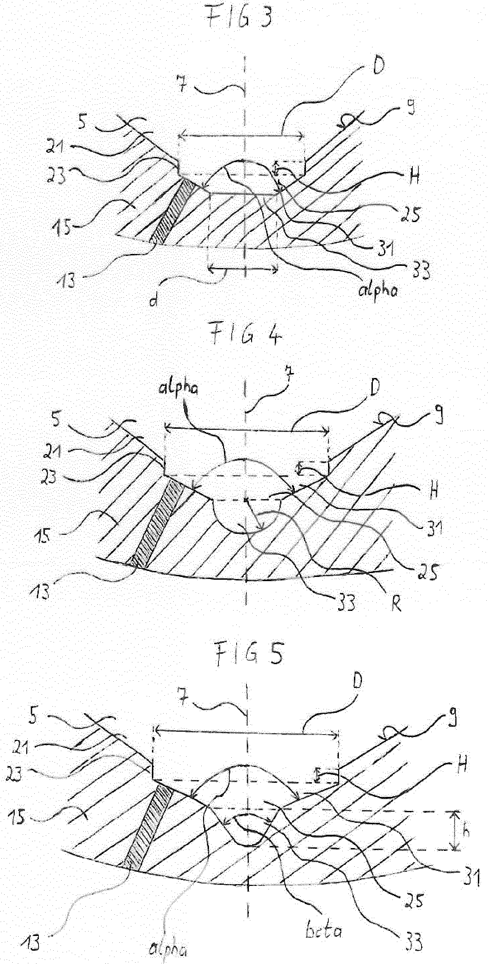

In this way, the sac volume step 23 makes a contribution to empty the sac volume 25 after the valve needle 11 has returned to its closing position and therefore reduces the risk for a nozzle tip wetting and for pollutant emissions. For generating advantageous flow conditions, it is preferable that the sac volume step 23 extends substantially parallel to the central longitudinal axis 7 and that the flow hole 13 is placed close to the sac volume step 23 as shown in figure 2. In figure 3, a furthermore enlarged view of the region 20 of the injector 1 in figure 1 is shown and in particular a detailed view of the inner surface of the sac volume 25.

In this example the sac volume step 23 adjacent to the seal seat area 21 is substantially extending parallel to the central longitudinal axis 7. A conically shaped area 31 adjacent to the sac volume step 23 has a decreasing distance to the central longitudinal axis 7 in the direction of the first axial end of the valve body. The conically shaped area 31 has a cone angle alpha. In one advantageous embodiment, the cone angle alpha of the conically shaped area 31 is in between 130° to 150°. A first diameter D of a free volume of the valve recess 5 in the region of the sac volume step 23 is represented by a geometrical distance of opposite sides of the sac volume step 23 in reference to a cross section with respect to the central longitudinal axis 7. Preferably the first diameter D is in between 1.0 mm to 1.4 mm. Moreover a ground area 33 adjacent to the conically shaped area 31 forms a further part of the inner surface of the wall 9 of the valve body limiting the sac volume 25. In this example, which does not belong to the invention, the ground area 33 has a flat shape defined by a portion of the inner surface of the wall 9 of the valve body. The size of the ground area 33 can be characterized by a second diameter d, for example. In this context one advantageous embodiment would comprise a second diameter d in between 0.4 mm to 0.8 mm. Furthermore the sac volume step 23 is distinguished by a step height H, and the step height H of the sac volume step 23 may be within a range from 0.01 mm to 0.15 mm.

This specific design of the sac volume step 23 adjacent to the seal seat area 21 and the sac volume 25 adjacent to the sac volume step 23 is one advantageous embodiment to generate special fluid flow dynamics and hence enables reliable emptying of the sac volume 25 after an injection process when the valve needle 11 has returned to its closing position and hence obviates a nozzle tip wetting.

In figure 4 a detailed view of the region 20 of the injector 1 according to another example for a shape of the sac volume 25 is shown which does not belong to the invention.

In this example, the ground area 33 comprises a further spherically shaped part of the inner surface of the wall 9 of the valve body instead of the flat shape of the previous embodiment. As in the previous example, the inlets of the flow holes 13 (of which only one is shown in the figures) are positioned within the conically shaped area 31 which laterally surrounds the ground area 33. The spherical shape of the ground area 33 allows for unique flow field dynamics to enhance emptying of the sac volume 25 and reduce remaining fuel inside the injector 1. The spherically shaped ground area 33 can have a radius R. In an advantageous embodiment, the radius R has a value between 0.2 mm and 0.4 mm.

In figure 5 yet another shape of the sac volume 25 is shown as an embodiment of the invention. The ground area 33 of the present sac volume 25 comprises a further conically shaped part of the inner surface of the wall 9 of the valve body forming the ground area 33. The further conically shaped part is located adjacent to - and in particular adjoining - the conically shaped area 31. Adjacent to the further conically shaped part on its side remote from the conically shaped area 31, the ground area 33 comprises a spherically shaped part of the inner surface of the wall 9 of the valve body 3 to limit the sac volume 25 in the direction to the first axial end of the valve body 3.

The conically shaped ground area 33 has a cone angle beta. Preferably the cone angle beta of the conically shaped ground area 33 is in between 90° to 120°. This specific design of the sac volume 25 is one possibility which allows for unique flow field dynamics for emptying the sac volume 25 from remaining fuel.

## Claims

1. Valve assembly (2) for a fluid injector (1) for a combustion engine comprising
- a valve body with a valve recess (5), a central longitudinal axis (7) and a first axial end and a second axial end with respect to the central longitudinal axis (7),
- a valve needle (11) being axially movable within the valve recess (5) with respect to the central longitudinal axis (7) and which prevents in concurrence with a seal seat area (21) of the valve body a fluid flow through at least one flow hole (13) in its closing position and otherwise enables it,
- a sac volume step (23) adjacent to the seal seat area (21) forming a part of an inner surface of a wall (9) of the valve body,
- a sac volume (25) being designed as one end of the valve recess (5) and being limited by a further part of the inner surface of the wall (9) of the valve body, and the further part of the inner surface extending away from the sac volume step (23) towards the first axial end of the valve body, and
- at least one flow hole (13) which penetrates the wall (9) of the valve body in the region of the sac volume (25) from the valve recess (5) to an outside region of the valve body, wherein the further part of the inner surface of the wall (9) of the valve body limiting the sac volume (25) comprises a conically shaped area (31) adjacent to the sac volume step (23), wherein the conically shaped area (31) has a decreasing distance to the central longitudinal axis (7) in direction to the first axial end of the valve body,
wherein
- the further part of the inner surface of the wall (9) of the valve body limiting the sac volume (25) comprises a conically shaped ground area (33) adjacent to the conically shaped area (31), wherein the conical shape of the conically shaped ground area (33) differs from one of the conically shaped area (31) and has a decreasing distance to the central longitudinal axis (7) in direction to the first axial end of the valve body, and
- the further part of the inner surface of the wall (9) of the valve body comprises a further spherically shaped part of the inner surface adjacent to the conically shaped ground area (33),
wherein the cone angle of the conically shaped area (31) has a value between 130° and 150°, whereas the cone angle of the conically shaped ground area has a value between 90° and 120°, and wherein the height (h) of the conically shaped ground area is in the range from 0.2 mm to 0.4 mm.

2. The valve assembly (2) in accordance with claim 1, wherein the sac volume step (23) substantially extends parallel to the central longitudinal axis (7).

3. The valve assembly (2) in accordance with claim 2, wherein the sac volume step (23) has a step height (H) in the range between 0.01 mm and 0.15 mm, the limits being included, and a diameter (D) of a free volume of the valve recess (5) in the region of the sac volume step (23 has a value in the range between 1.0 mm and 1.4 mm, the limits being included.

4. The valve assembly (2) in accordance with one of claims 1 to 3, wherein the inlet of the flow hole (13) is arranged proximate to the sac volume step (23).

5. The valve assembly (2) in accordance with claims 3 and 4, wherein a distance between the inlet of the flow hole and the sac volume step is less than 0.1 mm.

6. The valve assembly (2) in accordance with one of the preceding claims,
wherein the inlet of the flow hole (13) is arranged in the conically shaped area (31) of the sac volume (25).

7. Fluid injector (1) for an internal combustion engine comprising a valve assembly (2) according to one of the preceding claims.

## Patentansprüche

1. Ventilanordnung (2) für eine Fluideinspritzvorrichtung (1) für eine Brennkraftmaschine, die Folgendes umfasst:
- einen Ventilkörper mit einer Ventilvertiefung (5), einer mittleren Längsachse (7) und einem ersten axialen Ende und einem zweiten axialen Ende bezüglich der mittleren Längsachse (7),
- eine Ventilnadel (11), die axial innerhalb der Ventilvertiefung (5) bezüglich der mittleren Längsachse (7) bewegbar ist und die in Zusammenwirken mit einer Dichtungssitzfläche (21) des Ventilkörpers in ihrer schließenden Position verhindert, dass ein Fluid durch zumindest eine Durchflussöffnung (13) fließt, und die dies andernfalls ermöglicht,
- eine an die Dichtungssitzfläche (21) angrenzende Taschenvolumenstufe (23), die einen Teil einer inneren Oberfläche einer Wand (9) des Ventilkörpers bildet,
- ein Taschenvolumen (25), das als ein Ende der Ventilvertiefung (5) ausgestaltet ist und durch einen weiteren Teil der inneren Oberfläche der Wand (9) des Ventilkörpers begrenzt ist, wobei sich der weitere Teil der inneren Oberfläche von der Taschenvolumenstufe (23) weg in Richtung des ersten axialen Endes des Ventilkörpers erstreckt, und
- zumindest eine Durchflussöffnung (13), die die Wand (9) des Ventilkörpers im Bereich des Taschenvolumens (25) von der Ventilvertiefung (5) zu einem äußeren Bereich des Ventilkörpers durchdringt, wobei der weitere Teil der inneren Oberfläche der Wand (9) des Ventilkörpers, der das Taschenvolumen (25) begrenzt, eine konisch geformte Fläche (31), angrenzend an die Taschenvolumenstufe (23), umfasst, wobei die konisch geformte Fläche (31) einen sich in Richtung des ersten axialen Endes des Ventilkörpers verringernden Abstand zur mittleren Längsachse (7) hat, wobei
- der weitere Teil der inneren Oberfläche der Wand (9) des Ventilkörpers, der das Taschenvolumen (25) begrenzt, eine konisch geformte Bodenfläche (33), angrenzend an die konisch geformte Fläche (31), umfasst, wobei die konische Form der konisch geformten Bodenfläche (33) sich von der der konisch geformten Fläche (31) unterscheidet und einen sich in Richtung des ersten axialen Endes des Ventilkörpers verringernden Abstand zur mittleren Längsachse (7) hat, und
- der weitere Teil der inneren Oberfläche der Wand (9) des Ventilkörpers einen weiteren sphärisch geformten Teil der inneren Oberfläche, angrenzend an die konisch geformte Bodenfläche (33) hat,
wobei der Konuswinkel der konisch geformten Fläche (31) einen Wert zwischen 130° und 150° hat, wohingegen der Konuswinkel der konisch geformten Bodenfläche einen Wert zwischen 90° und 120° hat, und wobei die Höhe (h) der konisch geformten Bodenfläche im Bereich von 0,2 mm bis 0,4 mm liegt.

2. Ventilanordnung (2) nach Anspruch 1, wobei sich die Taschenvolumenstufe (23) im Wesentlichen parallel zur mittleren Längsachse (7) erstreckt.

3. Ventilanordnung (2) nach Anspruch 2, wobei die Taschenvolumenstufe (23) eine Stufenhöhe (H) im Bereich zwischen 0,01 mm und 0,15 mm hat, einschließlich der Grenzen, und einen Durchmesser (D) eines freien Volumens der Ventilvertiefung (5) im Bereich der Taschenvolumenstufe (23) einen Wert im Bereich zwischen 1,0 mm und 1,4 mm, einschließlich der Grenzen, hat.

4. Ventilanordnung (2) nach einem der Ansprüche 1 bis 3, wobei der Einlass der Durchflussöffnung (13) in Nähe der Taschenvolumenstufe (23) angeordnet ist.

5. Ventilanordnung (2) nach Ansprüchen 3 und 4, wobei ein Abstand zwischen dem Einlass der Durchflussöffnung und der Taschenvolumenstufe kleiner als 0,1 mm ist.

6. Ventilanordnung (2) nach einem der vorhergehenden Ansprüche, wobei der Einlass der Durchflussöffnung (13) in der konisch geformten Fläche (31) der Taschenvolumenstufe (25) angeordnet ist.

7. Fluideinspritzvorrichtung (1) für eine Brennkraftmaschine, umfassend eine Ventilanordnung (2) nach einem der vorhergehenden Ansprüche.

## Revendications

1. Ensemble de soupape (2) pour un injecteur de fluide (1) pour un moteur à combustion, comprenant
- un corps de soupape présentant un évidement de soupape (5), un axe longitudinal central (7) et une première extrémité axiale et une seconde extrémité axiale par rapport à l'axe longitudinal central (7),
- un pointeau de soupape (11) qui est déplaçable axialement à l'intérieur de l'évidement de soupape (5) par rapport à l'axe longitudinal central (7) et qui empêche en concurrence avec une région de siège de joint (21) du corps de soupape un écoulement de fluide à travers au moins un orifice d'écoulement (13) dans sa position de fermeture et qui autrement l'autorise,
- un gradin de volume de sac (23) adjacent à la région de siège de joint (21) et qui constitue une partie d'une surface intérieure d'une paroi (9) du corps de soupape,
- un volume de sac (25) qui est conçu comme une extrémité de l'évidement de soupape (5) et qui est limité par une partie supplémentaire de la surface intérieure de la paroi (9) du corps de soupape, et la partie supplémentaire de la surface intérieure s'étend à l'écart du le gradin de volume de sac (23) en direction de la première extrémité axiale du corps de soupape, et
- au moins un orifice d'écoulement (13) qui pénètre dans la paroi (9) du corps de soupape dans la région du volume de sac (25) à partir de l'évidement de soupape (5) jusqu'à une région extérieure du corps de soupape,
dans lequel la partie supplémentaire de la surface intérieure du le paroi (9) du corps de soupape qui limite le volume de sac (25) comprend une région de forme conique (31) adjacente au gradin de volume de sac (23), dans lequel la région de forme conique (31) présente une distance décroissante par rapport à l'axe longitudinal central (7) en direction de la première extrémité axiale du corps de soupape,
dans lequel
- la partie supplémentaire de la surface intérieure du la paroi (9) du corps de soupape qui limite le volume de sac (25) présente une région de base de forme conique (33) adjacente à la région de forme conique (31), dans lequel la forme conique de la région de base de forme conique (33) diffère de celle de la région de forme conique (31) et présente une distance décroissante par rapport à l'axe longitudinal central (7) en direction de la première extrémité axiale du corps de soupape, et
- la partie supplémentaire de la surface intérieure de la paroi (9) du corps de soupape présente une partie de forme sphérique supplémentaire de la surface intérieure adjacente à la région de base de forme conique (33),
dans lequel l'angle de cône de la région de forme conique (31) présente une valeur comprise entre 130° et 150°, alors que l'angle de cône de la région de base de forme conique présente une valeur comprise entrer 90° et 120°, et dans lequel la hauteur (h) de la région de base de forme conique est comprise dans la gamme de 0,2 mm à 0,4 mm.

2. Ensemble de soupape (2) selon la revendication 1, dans lequel le gradin de volume de sac (23) s'étend sensiblement parallèlement à l'axe longitudinal central (7).

3. Ensemble de soupape (2) selon la revendication 2, dans lequel le gradin de volume de sac (23) présente une hauteur de gradin (H) comprise dans la gamme de 0,01 mm à 0,15 mm, les limites étant incluses, et un diamètre (D) d'un volume libre de l'évidement de soupape (5) dans la région du gradin de volume de sac (23) présente une valeur comprise dans la gamme de 1,0 mm à 1,4 mm, les limites étant incluses.

4. Ensemble de soupape (2) selon l'une des revendications 1 à 3, dans lequel l'entrée de l'orifice d'écoulement (13) est agencée à proximité du gradin de volume de sac (23).

5. Ensemble de soupape (2) selon les revendications 3 et 4, dans lequel une distance entre l'entrée de l'orifice d'écoulement et le gradin de volume de sac est inférieure à 0,1 mm.

6. Ensemble de soupape (2) selon l'une des revendications précédentes, dans lequel l'entrée de l'orifice d'écoulement (13) est agencée dans la région de forme conique (31) du volume de sac (25).

7. Injecteur de fluide (1) pour un moteur à combustion interne comprenant un ensemble de soupape (2) selon l'une des revendications précédentes.
